# EUROPEAN PATENT SPECIFICATION

(11) **EP 2 612 881 B1**
(45) Date of publication and mention of the grant of the patent: **05.11.2014**
(21) Application number: 12150304.9
(22) Date of filing: 05.01.2012
(51) Int. Cl.: C08J 9/10, C08J 9/00, C08J 9/04, C08K 3/26, C08K 9/00, C08K 9/04

(54) **Fillers for foamed rigid polymer products**
Füllstoffe für geschäumte starre Polymerprodukte
Agents de remplissage pour produits de polymère rigides en mousse

(43) Date of publication of application: 10.07.2013
(73) Proprietor: Omya International AG, 4665 Oftringen (CH)
(72) Inventor: Raymond, Edward, Shrewsbury, VT Vermont 05738 (US); Lewis, Rabun Walker, Atlanta, GA Georgia 30306 (US)
(74) Representative: Glas, Holger

(56) References cited:
- US-A- 4 402 893
- US-A1- 2004 106 701
- US-A1- 2008 161 437
- US-B1- 6 323 269

## Description

The present invention relates to a resin composition for preparing foamed rigid polymer products, to a foamed rigid polymer product prepared from the composition, to a method for preparing a foamed rigid polymer product as well as to the use of a calcium carbonate for reducing the density of a foamed rigid polymer product.

Foamed rigid polymer products are used for a great variety of industrial applications such as for insulation of electrical wires, for pipes in various municipal and industrial applications, for housings of portable electronics, for signs or tiles, window and roller-blind profiles, wood substitutes and sheets etc. In particular, rigid polymer foams such as rigid PVC-µ foams are in a growing demand as foams show a reduced density compared to other PVC materials which also results in a lower part weight. However, in order to reduce the costs of such foam formulations mineral filler particles are used as an integral part of rigid polymer foams.

In the art, several attempts have been made to incorporate mineral fillers in rigid polymer foam formulations. For example, WO 2010/049530 A2 relates to profiles made of foamed polyvinyl chloride polymer comprising at least 40, preferably at least 60 weight parts of naturally occurring mineral filler for every 100 weight parts of PVC, wherein the naturally occurring mineral filler refers to wollastonite, vermiculite, talc, mica and/or combinations thereof. US 4,402,893 describes a method for the preparation of a cellular foamed body of a vinyl chloride-based resin having a very fine and uniform cellular structure with high productivity in a continuous process, wherein a vinyl chloride-based resin is admixed with a nucleating agent. Materials suitable as the nucleating agent are described as being calcium carbonate, talc, barium sulfate, fumed silica, titanium dioxide, clay, aluminum oxide, bentonite, diatomaceous earth. WO 00/00553 A1 refers to a method for processing mineral fillers with specific particle size distribution using treating agents such as organic phosphate, including a disaggregation step, an optionally a selection step, so as to improve the techniques for manufacturing polyurethane foams either by foaming without swelling auxiliary or with swelling auxiliary, such as CO₂, and composite polyurethane, by reducing the time for mixing said processed filler with polyol and other reagents. EP 0726298 A1 refers to a method for the treatment of mineral fillers using organic phosphate treatment agents, treated mineral fillers obtained by said method and suspension of these treated mineral fillers in polyols as well as to the use of these suspensions in the manufacture of flexible, semirigid, or rigid polyurethane foams used for the manufacture of molded or nonmolded objects.

US 6,323,269 B1 describes a mineral containing thermoplastic granule for incorporation in a thermoplastic material to produce a thermoplastic end product, the granule comprising at least 50 % by weight of an inorganic particulate material, at least 0.1 % by weight of an additive comprising a blowing agent, and the balance comprising a thermoplastic binder.

Unfortunately, an increasing amount of such mineral filler particles incorporated in the rigid polymer foam formulation causes the density and part weight of the foamed rigid product to increase.

A further approach considers the optimization of the blowing agent used for promoting foam formation in order to improve the evolution of gas during processing. This approach offers the advantage that the amount of blowing agent can be reduced while the amount of mineral filler particles can be increased at the same time so that the overall desired density and part weight is maintained. In this regard, several attempts have been made in the art to optimize the properties of blowing agents.

For example, CA 2 737 471 A1 describes that the density of rigid foamed articles made by the thermal decomposition of a blowing agent in a vinyl chloride polymer is reduced by the use of a tin based blowing agent activator(s). US 2006/0264523 A1 relates to the foams of polyvinyl chloride nanocomposites comprising of polyvinyl chloride, layered silicates, and foaming agents. It is further described that the layered silicates dispersed onto the vinyl chloride resins improve the foaming efficiency of the foaming agent. WO 2005/090456 A1 describes a method for the production of foamed halogen-containing organic plastics, wherein a blowing agent mixture comprising chemical blowing agents, polyols and salts of perchloric acid in form of a physical mixture is added to the plastic-containing pre-mixture before the extrusion and after homogeneous dispersion the resulting mixture is manipulated accordingly. US 5,821,274 relates to the use of stabilizers for foamed PVC resins as activators for the blowing agents used in the preparation of foamed polyvinyl chloride resins.

However, to comply with the requirement of maintaining a density and part weight as low as possible and to increase the amount of incorporated mineral filler particles in rigid polymer foams at the same time, the properties of the mineral filler and/or blowing agent still need to be improved.

Therefore, there is a continuous need for alternative materials used in foam formulations, which develop a lower density than existing mineral filler particles and blowing agents, and effectively reduce the density and weight of a foamed rigid polymer product.

This and other objects are solved by the subject-matter of the present invention. According to a first aspect of the present invention, a resin composition for preparing foamed rigid polymer products is provided, said composition comprises
a) at least one polymer resin,
b) a surface-treated calcium carbonate having a weight median particle diameter *d*₅₀ of between 0.5 µm and 0.9 µm, measured according to the sedimentation method, in an amount of at least 10 parts per hundred parts of the at least one polymer resin (phr), and
c) a blowing agent in an amount of less than 1 phr.

The inventors surprisingly found that the foregoing resin composition according to the present invention leads to a foamed rigid polymer product developing a density and part weight being lower than the density and part weight of a corresponding foamed rigid polymer product obtained from the same composition but without providing calcium carbonate having a weight median particle diameter *d*₅₀ of between 0.5 µm and 0.9 µm in an amount of at least 10 phr and a blowing agent in an amount of less than 1 phr. More precisely, the inventors found that the density and part weight of a foamed rigid polymer product can be effectively reduced by preparing the polymer foam from a resin composition containing a combination of a defined calcium carbonate and a blowing agent.

It should be understood that for the purposes of the present invention, the following terms have the following meaning:
The term "polymer foam" in the meaning of the present invention refers to a foam having a density of below the density of an unfoamed polymer, preferably of less than 1.33 g/cm³, more preferably of between 0.5 g/cm³ and 1.33 g/cm³, even more preferably of between 0.5 g/cm³ and 1 g/cm³ and most preferably of between 0.5 g/cm³ and 0.8 g/cm³.

The term "rigid" polymer product in the meaning of the present invention refers to a polymer product that has been prepared without using plasticizers.

The term "polymer resin" in the meaning of the present invention refers to a polymeric material, either solid or liquid, prior to processing it into a polymeric plastic product.

The term "surface-treated" calcium carbonate in the meaning of the present invention refers to a material comprising calcium carbonate covered by a coating consisting of the agent used for the surface treatment and reaction products thereof.

The term "blowing agent" in the meaning of the present invention refers to agents which are capable of producing a cellular structure in a polymer product during the foaming process.

As used herein and as generally defined in the art, the weight median particle diameter "*d*₅₀" value is defined as the size at which 50 % (the mean point) of the particle volume or mass is accounted for by particles having a diameter equal to the specified value. The weight median particle diameter was measured according to the sedimentation method. The sedimentation method is an analysis of sedimentation behaviour in a gravimetric field. The measurement is made with a Sedigraph^{™} 5100 of Micromeritics Instrument Corporation.

The term "phr" in the meaning of the present invention means "parts per hundred resins". In particular, if 100 parts of polymer resin are used, the quantity of other ingredients is expressed in relation to this 100 parts of polymer resin.

Another aspect of the present invention is directed to a method of preparing a foamed rigid polymer product comprising the steps of providing the resin composition for preparing foamed rigid polymer products, and subjecting the resin composition to conditions under which said composition is converted into a foamed rigid polymer product. It is preferred that the obtained foamed rigid polymer product has a density of below 1.33 g/cm³, preferably of below 1 g/cm³, more preferably of below 0.8 g/cm³, even more preferably of below 0.75 g/cm³ and most preferably of below 0.73 g/cm³. It is also preferred that the obtained foamed rigid polymer product has a charpy impact strength at 23 °C of between 1.65 kJ/m² and 2 kJ/m², more preferably between 1.70 kJ/m² and 1.95 kJ/m² and most preferably between 1.75 kJ/m² and 1.80 kJ/m², measured according to ISO 179/1eA on extruded samples.

A further aspect of the present is directed to the use of a surface treated calcium carbonate having a weight median particle diameter *d*₅₀ from 0.5 and 0.9 µm, measured according to the sedimentation method, for reducing the density of a foamed rigid polymer product. It is preferred that the calcium carbonate has a weight median particle diameter *d*₅₀ from 0.6 µm to 0.8 µm and more preferably of 0.7 µm, measured according to the sedimentation method. It is further preferred that the calcium carbonate has a top cut of below 8 µm, preferably of below 6 µm and more preferably of 4 µm. It is still further preferred that the calcium carbonate has a specific surface area of from 1 m²/g to 25 m²/g, preferably 5 m²/g to 15 m²/g and more preferably 8 m²/g to 13 m²/g, measured using nitrogen and the BET method. It is also preferred that the calcium carbonate is ground calcium carbonate (GCC) and/or precipitated calcium carbonate (PCC), preferably ground calcium carbonate. It is preferred that at least 1 % of the aliphatic carboxylic acid accessible surface area of the calcium carbonate is covered by a coating comprising at least one aliphatic carboxylic acid having between 4 and 24 carbon atoms and/or reaction products thereof, preferably by a coating comprising stearic acid and/or reaction products thereof. It is further preferred that the calcium carbonate is present in an amount of at least 5 phr, preferably of at least 10 phr, more preferably of at least 15 phr and most preferably of 20 phr. It is still further preferred that the foamed rigid polymer product has a density of below 1.33 g/cm³, preferably of below 1 g/cm³, more preferably of below 0.8 g/cm³, even more preferably of below 0.75 g/cm³ and most preferably of below 0.73 g/cm³, for example of 0.71 g/cm³. It is also preferred that the foamed rigid polymer product has a charpy impact strength at 23 °C of between 1.65 kJ/m² and 2 kJ/m², more preferably between 1.70 kJ/m² and 1.95 kJ/m² and most preferably between 1.75 kJ/m² and 1.80 kJ/m², measured according to ISO 179/1eA on extruded samples.

A still further aspect of the present invention is directed to a foamed rigid polymer product prepared from the composition for preparing foamed rigid polymer products.

In the resin composition according to the present invention, the calcium carbonate has a weight median particle diameter *d*₅₀ of between 0.5 µm to 0.9 µm, preferably from 0.6 µm to 0.8 µm and more preferably of 0.7 µm, measured according to the sedimentation method.

According to a preferred embodiment of the resin composition according to the present invention, the calcium carbonate has a top cut of below 8 µm, preferably of below 6 µm and more preferably of 4 µm.

According to yet another preferred embodiment of the resin composition according to the present invention, the calcium carbonate has a specific surface area of from 1 m²/g to 25 m²/g, preferably 5 m²/g to 15 m²/g and more preferably 8 m²/g to 13 m²/g, measured using nitrogen and the BET method.

According to one preferred embodiment of the resin composition according to the present invention, the calcium carbonate is ground calcium carbonate (GCC) and/or precipitated calcium carbonate (PCC), preferably ground calcium carbonate.

According to another preferred embodiment of the resin composition according to the present invention, at least 1 % of the aliphatic carboxylic acid accessible surface area of the calcium carbonate is covered by a coating comprising at least one aliphatic carboxylic acid having between 4 and 24 carbon atoms and/or reaction products thereof, preferably by a coating comprising stearic acid and/or reaction products thereof

According to yet another preferred embodiment of the resin composition according to the present invention, the calcium carbonate is present in an amount of at least 15 phr and more preferably of 20 phr.

According to one preferred embodiment of the resin composition according to the present invention, the blowing agent is present in an amount of between 0.3 phr and 0.8 phr and most preferably in an amount of between 0.5 phr and 0.7 phr and/or the blowing agent is azodicarbonamide.

According to another preferred embodiment of the resin composition according to the present invention, the composition further comprises at least one component selected from the group comprising nucleating agents, stabilizers, impact modifiers, lubricant additives, processing aids and mixtures thereof.

According to yet another preferred embodiment of the resin composition according to the present invention, the at least one polymer resin is selected from the group comprising halogenated polymer resins, styrenic resins, acrylic resins, polyolefines, polycarbonate resins, unsaturated polyester resins, polyurethane resins, polyamide resins and mixtures thereof, preferably the polymer resin is PVC. It is preferred that the PVC resin has a K-value of between 50 and 68.

As set out above, the inventive resin composition for preparing foamed rigid polymer products comprises the components a), b) and c). When in the following more detailed description of the invention, reference is made to the components of the inventive resin composition, it is to be understood that the at least one polymer resin, the surface-treated calcium carbonate and the blowing agent also apply to the method for preparing foamed rigid polymer products, the surface treated calcium carbonate having a weight median particle diameter *d*₅₀ of between 0.5 µm and 0.9 µm for reducing the density of a foamed rigid polymer product and the foamed rigid polymer product prepared from the resin composition, which are provided according to the present invention.

The resin composition of the present invention for preparing foamed rigid polymer products comprises at least one polymer resin. The polymer resin represents the backbone of the composition and provides strength, flexibility, toughness and durability to the final foamed rigid polymer product.

In one preferred embodiment, the at least one polymer resin is selected from the group comprising halogenated polymer resins, styrenic resins, acrylic resins, polyolefines, polycarbonate resins, unsaturated polyester resins, polyurethane resins, polyamide resins and mixtures thereof.

If the polymer resin is a halogenated polymer resins, the polymer resin is preferably selected from the group comprising PVC, post-chlorinated vinyl polychloride (PVCC), vinylidene polyfluoride (PVDF) and mixtures thereof.

If the polymer resin is a styrenic resin, the polymer resin is preferably selected from the group comprising styrene-butadiene copolymers with a high styrene rate (HIPS), block copolymers of the Kraton^{™} type, resins of the styrene-acrylonitrile type, acrylate-butadiene-styrene resins, methylmethacrylate styrene copolymers and mixtures thereof.

If the polymer resin is an acrylic resin, the polymer resin is preferably a methyl polymethacrylate.

If the polymer resin is polyolefine, the polymer resin is preferably selected from the group comprising homopolymers or copolymers of polyethylenes and/or polypropylenes and mixtures thereof.

If the polymer resin is unsaturated polyester resins, the polymer resin is preferably selected from the group comprising terephthalate polyethylene and/or the terephthalate polybutylenes.

It is preferred that the polymer resin is selected from the halogenated resins, such as PVC, post-chlorinated vinyl polychloride (PVCC), vinylidene polyfluoride (PVDF), or selected from the acrylic resins, such as methyl polymethacrylate, or selected from the polycarbonate resins, or selected from the unsaturated polyester resins, such as terephthalate polyethylene and/or the terephthalate polybutylenes.

In one especially preferred embodiment, the polymer resin is PVC.

For example, the at least one polymer resin as used herein is a polyvinyl chloride resin which can be processed into a rigid PVC foam. Preferably, the polyvinyl chloride resin comprises a polyvinyl chloride homopolymer or a copolymer of vinyl chloride with a copolymerizable ethylenically unsaturated monomer. In case a homopolymer of polyvinyl chloride is provided, the polyvinyl chloride resin contains monomers consisting of vinyl chloride alone.

If a polyvinyl chloride copolymer is provided, the polyvinyl chloride resin contains a mixture of monomers comprising a predominant amount of monomers consisting of vinyl chloride. In one preferred embodiment, the polyvinyl chloride resin contains a mixture of monomers comprising an amount of monomers consisting of vinyl chloride of at least 60 wt.-%, more preferably of at least 70 wt.-% and most preferably of at least 80 wt.-%, based on the total weight of the monomer mixture. Vinyl chloride copolymers are preferably composed of vinyl chloride and from 1 to 40 wt.-% of a copolymerizable ethylenically unsaturated monomer, preferably of at most of 30 wt.-% and most preferably of at most of 20 wt.-% of a copolymerizable ethylenically unsaturated monomer, based on the total weight of the monomer mixture.

Preferably, the copolymerizable ethylenically unsaturated monomer is selected from the group consisting ofvinylidene chloride, vinyl acetate, vinyl butyrate, vinyl benzoate, vinylidene chloride, diethyl fumarate, diethyl maleate, vinyl propionate, methyl acrylate, butyl acrylate, methyl methacrylate, ethyl methacrylate, butyl methacrylate, styrene, vinyl ethers such as vinyl ethyl ether, vinyl chloroethyl ether and vinyl phenyl ether, vinyl ketones such as vinyl methyl ketone and vinyl phenyl ketone, acrylonitrile, chloroacrylonitrile and mixtures thereof. It is further preferred that the polyvinyl chloride copolymers of the present invention comprise monomers of vinyl chloride and vinyl acetate, vinyl chloride and vinyl acetate and maleic anhydride or vinyl chloride and vinylidene chloride.

In one preferred embodiment, the polyvinyl chloride resin comprises a homopolymer of polyvinyl chloride.

Alternatively, the at least one polyvinyl chloride resin comprises a mixture of a polyvinyl chloride homopolymer and a polyvinyl chloride copolymer comprising monomers of vinyl chloride and vinyl acetate, vinyl chloride and vinyl acetate and maleic anhydride or vinyl chloride and vinylidene chloride.

If the at least one polyvinyl chloride resin according to the present invention comprises a mixture of a polyvinyl chloride homopolymer and a polyvinyl chloride copolymer, the mole ratio of the homopolymer and the copolymer is from 99:1 to 1:99, more preferably from 50:1 to 1:50, even more preferably from 25:1 to 1:25 and most preferably from 10:1 to 1:10. In one especially preferred embodiment of the present invention, the mole ratio of the homopolymer and the copolymer is from 90:1 to 1:1, more preferably from 90:1 to 10:1 and most preferably from 90:1 to 50:1. In another preferred embodiment, the mole ratio of the homopolymer and the copolymer is about 1:1.

Although any homopolymer or copolymer of polyvinyl chloride may be utilized, it is even more preferred that the polyvinyl chloride polymer has a K-value of between 50 and 68 which corresponds to a weight average molecular weight from 40,000 to 100,000 g/mole. The "K-value" of a polymer is used to denote the degree of polymerization or molecular weight and is calculated from the inherent viscosity. Preferably, the polyvinyl chloride resin is selected such that the polymer develops a K-value between 54 and 64 (e.g., a weight average molecular weight of from 50,000 to 78,000 g/mole) and more preferably between 58 and 62 (e.g., a weight average molecular weight of from 59,000 to 74,000 g/mole). For example, the polyvinyl chloride polymer has a K-value of about 60 (having a weight average molecular weight of 66,000 g/mole). In one especially preferred embodiment, the polyvinyl chloride polymer comprises a homopolymer having a K-value of 60 (having a weight average molecular weight of 66,000 g/mole).

Polyvinyl chloride resins suitable in the inventive composition are available from a wide variety of commercial sources. Useful polyvinyl chloride resins include the resins available from INEOS Chlor Americas Inc., Wilmington, USA as Evipol SH6030 PVC.

In one preferred embodiment, the resin composition of the present invention comprises the at least one polymer resin in an amount of at least 50 wt.-%, more preferably from 60 wt.-% to 90 wt.-% and most preferably from 70 wt.-% to 90 wt.-%, based on the total weight of the resin composition. In one preferred embodiment, the resin composition of the present invention comprises the at least one polymer resin in an amount of at least 70 wt.-% and 80 wt.-%, based on the total weight of the resin composition. For example, the resin composition of the present invention comprises at least one polyvinyl chloride resin in an amount of 76 wt.-%, based on the total weight of the resin composition.

The at least one polymer resin may be in the form of flakes, granules, pellets, and/or a powder.

The resin composition of the present invention further comprises a surface-treated calcium carbonate having a weight median particle diameter *d*₅₀ value of between 0.1 µm and 1 µm, measured according to the sedimentation method. The resin composition comprises the surface-treated calcium carbonate in an amount of at least 10 phr.

Calcium carbonate (CaCO₃) can be of two types: ground or natural calcium carbonate referred to as GCC which is understood to be a naturally occurring form of calcium carbonate, mined from sedimentary rocks such as limestone or chalk, or from metamorphic marble rocks, and synthetic or precipitated calcium carbonate referred to as PCC, generally obtained by precipitation following reaction of carbon dioxide and lime in an aqueous environment or by precipitation of a calcium and carbonate ion source in water. PCC may be rhombohedral and/or scalenohedral and/or aragonitic. In contrast, GCC is almost exclusively of the calcitic polymorph, which is said to be trigonal-rhombohedral and represents the most stable of the calcium carbonate polymorphs. GCC includes marble, limestone, chalk or mixtures thereof.

The calcium carbonate of the present invention is preferably selected from the group comprising ground calcium carbonate (GCC), precipitated calcium carbonate (PCC) and mixtures thereof.

In one preferred embodiment, the calcium carbonate is ground calcium carbonate.

Preferably, the ground calcium carbonate is selected from the group comprising marble, limestone, chalk or mixtures thereof. In one preferred embodiment, the ground calcium carbonate is marble.

In one preferred embodiment, the calcium carbonate has a weight median particle diameter *d*₅₀ value from 0.6 µm to 0.8 µm, measured according to the sedimentation method. For example, the calcium carbonate has a weight median particle diameter *d*₅₀ value of 0.7 µm.

Alternatively or additionally, the calcium carbonate has a top cut, for example, of below 10 µm. The term "top cut" (or top size), as used herein, means the particle size value wherein at least 98 wt.-% of the material particles are less than that size. Preferably, the calcium carbonate has a top cut of below 8 µm and more preferably of below 6 µm. In one especially preferred embodiment, the calcium carbonate has a top cut of 4 µm.

In one preferred embodiment, at least 70 wt.-% of the calcium carbonate particles are finer than 2 µm, and at least 50 wt.-% of the calcium carbonate particles are finer than 1 µm, preferably at least 80 wt.-% of the calcium carbonate particles are finer than 2 µm, and at least 55 wt.% of the calcium carbonate particles are finer than 1 µm and more preferably at least 85 wt.-% of the calcium carbonate particles are finer than 2 µm, and at least 60 wt.-% of the calcium carbonate particles are finer than 1 µm.

In one especially preferred embodiment, 90 wt.-% of the calcium carbonate particles are finer than 2 µm, and 65 wt.-% of the calcium carbonate particles are finer than 1 µm.

The calcium carbonate preferably has a specific surface area of from 1 m²/g to 25 m²/g, preferably 5 m²/g to 15 m²/g and more preferably 8 m²/g to 13 m²/g, measured using nitrogen and the BET method. For example, the calcium carbonate has a specific surface area of from 9 m²/g to 10 m²/g.

In one preferred embodiment, the calcium carbonate has a specific surface area within the range of 1 m²/g to 25 m²/g and a weight median particle diameter *d*₅₀ value within the range of 0.4 µm to 0.9 µm. More preferably, the specific surface area is within the range of 5 m²/g to 15 m²/g and the weight median particle diameter *d*₅₀ value is within the range of 0.5 µm to 0.9 µm. Even more preferably, the specific surface area is within the range of 8 m²/g to 13 m²/g and the weight median particle diameter is within the range of 0.6 µm to 0.8 µm. For example, the calcium carbonate has a specific surface area within the range of 9 m²/g to 10 m²/g and a weight median particle diameter *d*₅₀ value of about 0.7 µm.

It has to be noted that the values given above for the weight median particle diameter *d*₅₀, top cut and specific surface area of the calcium carbonate apply for non surface-treated calcium carbonate particles, i.e. the values are measured before the calcium carbonate particles are surface-treated.

In one preferred embodiment, the calcium carbonate is provided in the form of a powder.

The term "powder" as used in the present invention, encompasses solid mineral powders of at least 90 wt.-% inorganic mineral matter, based on the total weight of the powder, wherein the powder particles have a weight median particle diameter *d*₅₀ value of 0.5 µm to 0.9 µm.

In order to obtain calcium carbonate particles of the respective dimensions, the calcium carbonate may be subjected to a grinding process such as a dry grinding or wet grinding process which can be carried out with any conventional grinding device such as a grinding mill known to the skilled person.

In one preferred embodiment, the calcium carbonate is comminuted by wet grinding. The wet grinding of calcium carbonate, when employed, may be done for example by ball milling, which is well known in the art. The wet ground calcium carbonate may be also washed and dewatered in a known manner, for example, by flocculation, filtration or forced evaporation, prior to drying. If flocculation is used for dewatering the calcium carbonate, a polyelectrolyte might be added in small quantities as flocculating aid. The amount of such polyelectrolyte is, for example, not greater than 0.05 wt.-% based on the dry weight of the calcium carbonate. Conventional polyelectrolytes known to the skilled person can be used. Such grinding step may require a drying of the calcium carbonate, thereby obtaining the calcium carbonate in the form of a powder.

The term "dried" is understood to refer to calcium carbonate particles having a total surface moisture content of less than 0.5 wt.-%, preferably less than 0.4 wt.-%, more preferably less than 0.3 wt.-% and most preferably of less than 0.25 wt.-%, based on the total weight of the calcium carbonate. In one especially preferred embodiment, the calcium carbonate particles have a total surface moisture content of less than 1.5 wt.-%, preferably less than 1 wt.-%, more preferably less than 0.09 wt.-% and most preferably of less than 0.08 wt.-%, based on the total weight of the calcium carbonate. For example, the calcium carbonate particles have a total surface moisture content of 0.07 wt.-%, based on the total weight of the calcium carbonate. For the purpose of the present invention, the term "total surface moisture content" refers to the amount of water absorbed on the surface of the calcium carbonate and the pores within the calcium carbonate. The wt.-% water of the present invention is determined by moisture loss at 110 °C.

Preferably, the calcium carbonate used in the inventive resin composition is surface-treated. For example, at least 1 % of the aliphatic carboxylic acid accessible surface area of the calcium carbonate is covered by a coating comprising at least one aliphatic carboxylic acid having between 4 and 24 carbon atoms and/or reaction products thereof.

The term "aliphatic carboxylic acid" in the meaning of the present invention refers to straight chain, branched chain, saturated, unsaturated or alicyclic organic compounds composed of carbon and hydrogen. Said organic compound further contains a carboxyl group placed at the end of the carbon skeleton.

The term "aliphatic carboxylic acid accessible surface area" in the meaning of the present invention refers to the surface of the calcium carbonate particle that is accessible or exposed to the aliphatic carboxylic acid applied by coating techniques known to the skilled person such as hot fluidised bed spray coating, hot-wet coating, solvent-assisted or self-assembly coating and the like and thereby forming a monolayer of aliphatic carboxylic acid on the surface of the calcium carbonate particle. In this regard, it should be noted that the amount of aliphatic carboxylic acid required for full saturation of the accessible surface area is defined as a monolayer concentration. Higher concentrations thus can be chosen as well thereby forming bilayered or multi-layered structures on the surface of the calcium carbonate particle. Such monolayer concentrations can be readily calculated by the skilled person, based on the publication of Papirer, Schultz and Turchi (Eur. Polym. J., Vol. 20, No. 12, pp. 1155-1158, 1984).

The term "reaction products" in the meaning of the present invention refers to the products typically obtained by contacting a ground calcium carbonate and/or a precipitated calcium carbonate with an aliphatic carboxylic acid having between 5 and 24 carbon atoms. Said reaction products are preferably formed between the applied aliphatic carboxylic acid and molecules located at the surface of the ground calcium carbonate and/or the precipitated calcium carbonate.

The at least one aliphatic carboxylic acid in the meaning of the present invention may be selected from one or more straight chain, branched chain, saturated, unsaturated and/or alicyclic carboxylic acids. Preferably, the at least one aliphatic carboxylic acid is a monocarboxylic acid, i.e. the aliphatic carboxylic acid is characterized in that a single carboxyl group is present. Said carboxyl group is placed at the end of the carbon skeleton.

In one preferred embodiment, the aliphatic carboxylic acid accessible surface area of the calcium carbonate used in the inventive resin composition is covered by a coating comprising at least one aliphatic carboxylic acid having between 4 and 24 carbon atoms which is selected from saturated unbranched carboxylic acids and/or reaction products thereof, that is to say the aliphatic carboxylic acid is preferably selected from the group consisting of butanoic acid, pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid and mixtures thereof.

In a further preferred embodiment, the at least one aliphatic carboxylic acid is selected from the group consisting of octanoic acid, decanoic acid, lauric acid, myristic acid, palmitic acid, stearic acid, arachidic acid and mixtures thereof. Preferably, the at least one aliphatic carboxylic acid is selected from the group consisting of myristic acid, palmitic acid, stearic acid arachidic acid, behenic acid, lignoceric acid and mixtures thereof.

In a further preferred embodiment, the at least one aliphatic carboxylic acid is stearic acid.

In one preferred embodiment, the aliphatic carboxylic acid comprises a mixture of at least two aliphatic carboxylic acids having 4 to 24 carbon atoms. Preferably, if the aliphatic carboxylic acid comprises a mixture of at least two aliphatic carboxylic acids having between 4 and 24 carbon atoms, one aliphatic carboxylic acid is stearic acid.

For example, the aliphatic carboxylic acid comprises a mixture of two aliphatic carboxylic acids having between 4 and 24 carbon atoms, wherein one aliphatic carboxylic acid is selected from stearic acid and the other one is selected from the group consisting of myristic acid, palmitic acid, arachidic acid, behenic acid and lignoceric acid.

If the aliphatic carboxylic acid comprises a mixture of two aliphatic carboxylic acids having between 4 and 24 carbon atoms, the mole ratio of stearic acid and the second aliphatic carboxylic acid is from 99:1 to 1:99, more preferably from 50:1 to 1:50, even more preferably from 25:1 to 1:25 and most preferably from 10:1 to 1:10. In one especially preferred embodiment of the present invention, the mole ratio of stearic acid and the second aliphatic carboxylic acid is from 90:1 to 1:1, more preferably from 90:1 to 10:1 and most preferably from 90:1 to 50:1.

If the aliphatic carboxylic acid comprises a mixture of two aliphatic carboxylic acids having between 4 and 24 carbon atoms, at least 1 % of the aliphatic carboxylic acid accessible surface area of the calcium carbonate is covered by a coating preferably comprising a mixture of stearic acid, myristic acid and/or reaction products thereof. In a further preferred embodiment, at least 1 % of the aliphatic carboxylic acid accessible surface area of the calcium carbonate is covered by a coating comprising a mixture of stearic acid, palmitic acid and/or reaction products thereof. In yet another preferred embodiment, at least 1 % of the aliphatic carboxylic acid accessible surface area of the calcium carbonate is covered by a coating comprising a mixture of stearic acid, arachidic acid and/or reaction products thereof.. In still another preferred embodiment, at least 1 % of the aliphatic carboxylic acid accessible surface area of the calcium carbonate is covered by a coating comprising a mixture of stearic acid, behenic acid and/or reaction products thereof. In a further preferred embodiment, at least 1 % of the aliphatic carboxylic acid accessible surface area of the calcium carbonate is covered by a coating comprising a mixture of stearic acid, lignoceric acid and/or reaction products thereof.

If at least 1 % of the aliphatic carboxylic acid accessible surface area of the calcium carbonate is covered by a coating comprising a mixture of two aliphatic carboxylic acids having between 4 and 24 carbon atoms, the mixture of aliphatic carboxylic acids comprises stearic acid and palmitic acid. Preferably, the mixture of aliphatic carboxylic acids comprises at least 60 wt.-% of stearic acid, more preferably at least 70 wt.-% and most preferably at least 80 wt.-%, based on the total weight of the mixture of aliphatic carboxylic acids. Alternatively, the mixture of aliphatic carboxylic acids comprises at most 40 wt.% of palmitic acid, more preferably at most 30 wt.-% and most preferably at most 20 wt.-%, based on the total weight of the mixture of aliphatic carboxylic acids.

In one preferred embodiment, the at least one aliphatic carboxylic acid is present in the coating covering the calcium carbonate in a quantity such that the total weight of said at least one aliphatic carboxylic acid and/or reaction products of said at least one aliphatic carboxylic acid on the surface of the surface-treated calcium carbonate product is less than 50 % w/w, more preferably less than 15 % w/w and most preferably less than 10 % w/w of the calcium carbonate.

In another preferred embodiment, the at least one aliphatic carboxylic acid and/or reaction products of said at least one aliphatic carboxylic acid are present in the coating covering at least 1 % of the aliphatic carboxylic acid accessible surface area of the calcium carbonate in an amount of about 0.1 wt.% to 10 wt.%, more preferably of about 0.1 wt.% to 8 wt.-%, even more preferably of about 0.2 wt.-% to 5 wt.-% and most preferably of about 0.2 wt.-% to 2.5 wt.-%, based on the dry weight of the calcium carbonate.

Alternatively, at least 10 % of the aliphatic carboxylic acid accessible surface area of the calcium carbonate particles is covered by a coating comprising the at least one aliphatic carboxylic acid and/or reaction products of said at least one aliphatic carboxylic acid. In a preferred embodiment, at least 20 % of the aliphatic carboxylic acid accessible surface area of the calcium carbonate particles is covered by a coating comprising the at least one aliphatic carboxylic acid and/or reaction products of said at least one aliphatic carboxylic acid. In a further preferred embodiment, at least 30 % of the aliphatic carboxylic acid accessible surface area of the calcium carbonate particles is covered by a coating comprising the at least one aliphatic carboxylic acid and/or reaction products of said at least one aliphatic carboxylic acid, preferably at least 50 % of the aliphatic carboxylic acid accessible surface area. In another preferred embodiment, at least 75 % of the aliphatic carboxylic acid accessible surface area of the calcium carbonate particles is covered by a coating comprising the at least one aliphatic carboxylic acid and/or reaction products of said at least one aliphatic carboxylic acid. For example, at least 90 % of the aliphatic carboxylic acid accessible surface area of the calcium carbonate particles is covered by a coating comprising the at least one aliphatic carboxylic acid and/or reaction products of said at least one aliphatic carboxylic acid. Alternatively, between 1 % and 25 % of the aliphatic carboxylic acid accessible surface area of the calcium carbonate particles is covered by a coating comprising the at least one aliphatic carboxylic acid and/or reaction products of said at least one aliphatic carboxylic acid.

The calcium carbonate can be surface-treated with the aliphatic carboxylic acid having between 4 and 24 carbon atoms by any conventional surface treatment method known to the skilled person.

However, the average temperature at which the calcium carbonate is treated with the aliphatic carboxylic acid having between 4 and 24 carbon atoms may, for example, range from 60 °C to 200 °C, e.g. from 80 °C to 150 °C with a residence time of the calcium carbonate in the vessel being greater than about 10 seconds.

Surface-treated calcium carbonates having a weight median particle diameter *d*₅₀ of between 0.5 µm and 0.9 µm, measured according to the sedimentation method, suitable in the inventive composition are available from a wide variety of commercial sources. Useful surface-treated calcium carbonates include the calcium carbonates available from Omya Inc, Vermont, USA as Hydrocarb^{®} UFT Extra and Omyacarb^{®} UFT.

In one preferred embodiment, the surface-treated calcium carbonate is further stabilised by a dispersant. Conventional dispersants known to the skilled person can be used.

For example, the surface-treated calcium carbonate may be stabilised by a dispersant as described as comb polymer in US 2009/0270543 A1.

In one preferred embodiment, the dispersant is a polymer prepared from 92 wt.-% methoxy polyethylene glycol methacrylate of molecular weight 2,000 g/mole and 8 wt.-% acrylic acid and at least partially neutralised by soda. In a further preferred embodiment, the dispersant is a polymer prepared from 92 wt.-% methoxy polyethylene glycol methacrylate of molecular weight 2,000 g/mole and 8 wt.-% acrylic acid and totally neutralised by soda. It is preferred that the dispersant has a molecular weight of about 35,000 g/mol.

The amount of the dispersant is, for example, not greater than 0.75 wt.-% preferably between 0.3 wt.-% and 0.7 wt.-% and most preferably between 0.4 wt.-% and 0.6 wt.-% based on the dry weight of the calcium carbonate, for example 0.45 wt.-%.

In one preferred embodiment, the resin composition comprises the surface-treated calcium carbonate in an amount of at least 15 phr and more preferably in an amount of at least 20 phr. In one especially preferred embodiment, the resin composition of the present invention comprises the surface-treated calcium carbonate in an amount of 20 phr.

Alternatively, the resin composition comprises the surface-treated calcium carbonate in an amount of at least 8 wt.-%, more preferably from 8 wt.-% to 40 wt.-% and most preferably from 10 wt.-% to 30 wt.-%, based on the total weight of the resin composition. In one preferred embodiment, the resin composition comprises the surface-treated calcium carbonate in an amount of between 10 wt.-% and 25 wt.-%, based on the total weight of the resin composition. For example, the resin composition comprises the surface-treated calcium carbonate in an amount of between 10 wt.-% and 20 wt.-%, more preferably of 15 wt.%, based on the total weight of the resin composition.

In one especially preferred embodiment, the calcium carbonate is a wet ground calcium carbonate having a specific surface area within the range of 11 m²/g to 13 m²/g and a weight median particle diameter *d*₅₀ value of 0.7 µm and is surface-treated with stearic acid. It is preferred that 90 wt.% of the calcium carbonate particles are finer than 2 µm, and 65 wt.-% of the calcium carbonate particles are finer than 1 µm. Additionally or alternatively, the wet ground calcium carbonate particles have a total surface moisture content of less than 0.25 wt.-%, based on the total weight of the calcium carbonate.

The resin composition of the present invention further comprises a blowing agent. The blowing agent may be of the type well know to the skilled person and widely used in foaming of polymers such as organic blowing agents, inorganic blowing agents, physical blowing agents or blowing agents that undergo phase change from liquid to gas during the foaming process. For example, organic blowing agents are selected from the group consisting of azodicarbonamide, diazoaminobenzene, azo-bis-isobutyro-nitrile and analogs thereof. Inorganic blowing agents are selected from the group consisting of ammonium carbonate, sodium bicarbonate and the like. Physical blowing agents are selected from nitrogen, carbon dioxide and other inert gases. Agents that undergo phase change from liquid to gas during the foaming process are selected from the group consisting of chlorofluorocarbons (CFC), HFCF, low boiling alcohols, ketones, and hydrocarbons.

Preferably, the blowing agent is a thermally decomposable blowing agent. In one preferred embodiment, the blowing agent is selected such that it decomposes at a temperature of at least 180 °C, more preferably of at least 190 °C and most preferably of at least 200 °C. For example, the blowing agent is selected such that is has a decomposition temperature of between 200 °C and 240 °C. The blowing agent may further comprise one or more additives to reduce its decomposition temperature.

In one preferred embodiment, the blowing agent is azodicarbonamide. For the purpose of the present invention, any azodicarbonamide that decomposes at a temperature higher than a specific temperature and generates gas is suitable for use in the inventive resin composition. In one preferred embodiment, the azodicarbonamide is selected such that it decomposes at a temperature of at least 180 °C, more preferably of at least 190 °C and most preferably of at least 200 °C. For example, the azodicarbonamide is selected such that is has a decomposition temperature of between 200 °C and 210 °C.

In one preferred embodiment, the composition of the present invention comprises the azodicarbonamide in powder form.

The blowing agent is used in an amount sufficient to produce the desired degree of foaming. Preferably, the resin composition of the present invention comprises the blowing agent in an amount of less than 1 phr, preferably in an amount of between 0.3 phr and 0.8 phr and most preferably in an amount of between 0.5 phr and 0.7 phr. For example, the blowing agent is present in the resin composition in an amount of 0.6 phr.

Alternatively, the resin composition of the present invention comprises the blowing agent in an amount of less than 1 wt.-%, more preferably from 0.3 wt.-% to 0.75 wt.-% and most preferably from 0.3 wt.-% to 0.6 wt.-%, based on the total weight of the resin composition. In one preferred embodiment the resin composition of the present invention comprises the blowing agent in an amount of between 0.3 wt.% and 0.5 wt.-%, based on the total weight of the resin composition. For example, the resin composition of the present invention comprises the blowing agent in an amount of 0.4 wt.-% to 0.5 wt.-%, based on the total weight of the resin composition. In one especially preferred embodiment, the resin composition of the present invention comprises the blowing agent in an amount of about 0.45 wt.-%, based on the total weight of the resin composition.

Blowing agents suitable in the inventive composition are available from a wide variety of commercial sources. For example, useful azodicarbonamide include the azodicarbonamide available from Cellular Additives, Asheville, USA as Forte-cell***.

The resin composition of the present invention may comprise further additives generally used for preparing foamed rigid polymer products. Such additives may be added for the purpose of e.g. increasing impact resistance, melt elasticity, stability and resistance to oxidation of the polymer product. Preferably, the resin composition further comprises at least one component selected from the group comprising nucleating agents, stabilizers, impact modifiers, lubricant additives, processing aids and mixtures thereof.

In one preferred embodiment, the resin composition of the present invention further comprises at least one processing aid. Processing aids are employed in the resin composition to improve melt elasticity and strength and to prevent the collapse of the cellular structure during processing. In one especially preferred embodiment, the processing aid is selected from low molecular weight acrylic polymers and/or high molecular weight acrylic polymers. The acrylic polymers are preferably acrylic copolymers.

If the processing aid is a low molecular weight acrylic polymer, the acrylic polymer is preferably an acrylic copolymer having a specific gravity of between 1.05 g/cm³ and 1.15 g/cm³, and more preferably of between 1.07 g/cm³ and 1.12 g/cm³, e.g. of about 1.10 g/cm³. Additionally or alternatively, the low molecular weight acrylic polymer has a bulk density of at least 0.35 g/cm³, more preferably of at least 0.38 g/cm³, and most preferably of at least 0.40 g/cm³, e.g. of about 0.40 g/cm³. "Bulk density" in the meaning of the present invention is a property of powders, granules and other "divided" solids and is defined as the mass of many particles of the material divided by the total volume they occupy. The total volume includes particle volume, inter-particle void volume and internal pore volume. Additionally or alternatively, the low molecular weight acrylic polymer has a specific viscosity of between 0.05 Pa·s and 0.30 Pa·s, more preferably of between 0.08 Pa·s and 0.25 Pa·s and most preferably of between 0.10 Pa·s and 0.20 Pa·s, e.g. of between 0.13 Pa·s and 0.19 Pa·s. Additionally or alternatively, not more than 2 wt.-%, more preferably not more than 1.5 wt.-% and most preferably not more than 1 wt.-% of the low molecular weight acrylic polymer particles pass through a 16 mesh sieve.

In case the processing aid is a high molecular weight acrylic polymer, the acrylic polymer is preferably an acrylic copolymer having a specific gravity of between 1.07 g/cm³ and 1.20 g/cm³ and more preferably of between 1.10 g/cm³ and 1.15 g/cm³, e.g. about 1.13 g/cm³. Additionally or alternatively, the high molecular weight acrylic polymer has a bulk density of at least 0.30 g/cm³, more preferably of at least 0.35 g/cm³, and most preferably of at least 0.38 g/cm³, e.g. of about 0.38 g/cm³. Additionally or alternatively, the high molecular weight acrylic polymer has a specific viscosity of between 1.5 Pa·s and 6.5 Pa·s, more preferably of between 2 Pa·s and 6 Pa·s and most preferably of between 2.5 Pa·s and 5.5 Pa·s, e.g. of between 3 Pa·s and 5 Pa·s. Additionally or alternatively, not more than 2 wt.-%, more preferably not more than 1.5 wt.-% and most preferably not more than 1 wt.-% of the high molecular weight acrylic polymer particles pass through a 16 mesh sieve.

In one especially preferred embodiment, the at least one processing aid comprises a mixture of processing aids. In a further preferred embodiment, the processing aid comprises a mixture of a low molecular weight acrylic polymer and a high molecular weight acrylic polymer.

If the processing aid comprises a mixture of a low molecular weight acrylic polymer and a high molecular weight acrylic polymer, the mole ratio of low molecular weight acrylic polymer and high molecular weight acrylic polymer is from 5:1 to 1:5, more preferably from 4:1 to 1:4, even more preferably from 3:1 to 1:3 and most preferably from 2:1 to 1:2. In one especially preferred embodiment of the present invention, the mole ratio of low molecular weight acrylic polymer and high molecular weight acrylic polymer is about 1:1.

The at least one processing aid is preferably provided in the form of a powder.

Processing aids suitable in the inventive composition are available from a wide variety of commercial sources. Useful processing aids include the processing aids available from Kaneka Texas Corporation, Pasadena, USA as Kane Ace^{®} PA101 Processing aid or Kane Ace^{®} PA40 Processing aid.

The resin composition of the present invention comprises the processing aid preferably in an amount of at least 0.5 phr, more preferably from 1 phr to 3 phr and most preferably from 1.5 phr to 2.5 phr. For example, the resin composition comprises the processing aid in an amount of 2 phr.

Alternatively, the resin composition comprises the processing aid in an amount of at least 1 wt.-%, more preferably from 1.25 wt.-% to 2.5 wt.-% and most preferably from 1.25 wt.-% to 2.0 wt.-%, based on the total weight of the resin composition. In one preferred embodiment, the resin composition comprises the processing aid in an amount of from 1. 5 wt.-% to 1.75 wt.-%, based on the total weight of the resin composition. For example, the resin composition comprises the processing aid in an amount from 1.5 wt.-% to 1.55 wt.-%, based on the total weight of the resin composition.

In one preferred embodiment, typical acrylic impact modifiers which are used to improve the impact strength of the rigid polymer foam may be added to the resin composition according to the particular circumstance. In this regard, the resin composition comprises the acrylic impact modifier in an amount of at least 1 phr, more preferably from 2 phr to 6 phr and most preferably from 3 phr to 5 phr. For example, the resin composition comprises the acrylic impact modifier in an amount of 4 phr.

Alternatively, the resin composition comprises the acrylic impact modifier in an amount of at least 1.5 wt.-%, more preferably from 1.5 wt.% to 5 wt.-% and most preferably from 2 wt.-% to 4 wt.-%, based on the total weight of the resin composition. In one preferred embodiment, the resin composition comprises the acrylic impact modifier in an amount of between 2.5 wt.-% and 3.5 wt.-%, based on the total weight of the resin composition. For example, the resin composition comprises the acrylic impact modifier in an amount from 3 wt.-% to 3.25 wt.-%, based on the total weight of the resin composition.

Acrylic impact modifiers suitable in the inventive composition are available from a wide variety of commercial sources. Useful acrylic impact modifiers include the acrylic impact modifier available from Dow Chemical Company, Midland, USA as Paraloid^{™} KM 366.

In one preferred embodiment, a stabilizer is added to the resin composition. In one especially preferred embodiment, a Ca-Zn-containing stabilizer is added to the resin composition. In this regard, the resin composition comprises the Ca-Zn-containing stabilizer preferably in an amount of at least 1 phr, more preferably from 2 phr to about 6 phr and most preferably from 3 phr to 5 phr. For example, the resin composition comprises the Ca-Zn-containing stabilizer in an amount of between 4 phr and 4.5 phr.

Alternatively, the resin composition comprises the Ca-Zn-containing stabilizer in an amount of at least 2 wt.-%, more preferably from 2 wt.-% to 5 wt.-% and most preferably from 2.5 wt.% to 5 wt.-%, based on the total weight of the resin composition. In one preferred embodiment, the resin composition comprises the Ca-Zn-containing stabilizer in an amount of between 2.5 wt.-% and 4 wt.-%, based on the total weight of the resin composition. For example, the resin composition comprises the Ca-Zn-containing stabilizer in an amount from 3 wt.-% to 3.5 wt.-%, based on the total weight of the resin composition.

Ca-Zn-containing stabilizers suitable in the inventive composition are available from a wide variety of commercial sources. Useful Ca-Zn-containing stabilizers include the Ca-Zn-containing stabilizer available from Inter-Harz GmbH, Elmshorn, Germany as Stabilox CZ 2913 GN.

Alternatively or additionally, the stabilizer may be selected from a wide variety of organotin stabilizers. For example, methyl tin, reverse ester tins and tin mercaptides may be added to the inventive composition. Such organotin stabilizers comprise several classes of compounds. Tin mercaptide stabilizers comprise blends of dialkyltin bis(iso-thioglycolates) with monoalkyltin tris(iso-thioglycolates). Reverse ester tin stabilizers comprise blends of dialkyltin bis(2-mercaptoethyl oleates). Other organotin stabilizers which may be added to the inventive composition comprise dialkytin carboxylateesters, of which the most common are dialkytin maleate esters such as dialkyltin maleate octoate.

If an organotin stabilizer is added to the inventive resin composition, said resin composition comprises the organotin stabilizer preferably in an amount of at least 0.1 phr, more preferably from 0.1 phr to about 1.75 phr and most preferably from 0.25 phr to 1.5 phr. For example, the resin composition comprises the organotin stabilizer in an amount of between 0.25 phr and 1.25 phr.

Alternatively, the resin composition comprises the organotin stabilizer in an amount of at least 0.1 wt.-%, more preferably from 0.1 wt.-% to 2.5 wt.-% and most preferably from 0.1 wt.% to 2 wt.-%, based on the total weight of the resin composition. In one preferred embodiment, the resin composition comprises the organotin stabilizer in an amount of between 0.1 wt.-% and 2 wt.-%, based on the total weight of the resin composition. For example, the resin composition comprises the organotin stabilizer in an amount from 0.1 wt.% to 1.75 wt.-%, based on the total weight of the resin composition.

In one preferred embodiment, a nucleating agent is added to the resin composition. The nucleating agent is preferably selected such that the formation of bubbles for the foaming is promoted. In one preferred embodiment, the nucleating agent does not support crystallization. The bubble-promoting nucleating agents can optionally be included in the resin composition. Such bubble-promoting nucleating agents can be selected from the variety of inert solids disclosed in the prior art to be useful as such nucleating agents, including mixtures of citric acid and sodium bicarbonate or other alkali metal bicarbonates, talc, silicon oxide, diatomaceous earth, kaolin, polycarboxylic acids and their salts, and titanium dioxide. Other inert solids disclosed in the art for these purposes may also be found suitable.

In one preferred embodiment, the resin composition comprises the nucleating agent preferably in an amount of at least 1 phr, more preferably from 2 phr to about 6 phr and most preferably from 3 phr to 5 phr. For example, the resin composition comprises the nucleating in an amount of between 4 phr and 4.5 phr.

Alternatively, the resin composition comprises the nucleating agent in an amount of at least 2 wt.-%, more preferably from 2 wt.-% to 5 wt.-% and most preferably from 2.5 wt.-% to 5 wt.-%, based on the total weight of the resin composition. In one preferred embodiment, the resin composition comprises the nucleating agent in an amount of between 2.5 wt.% and 4 wt.-%, based on the total weight of the resin composition. For example, the resin composition comprises the nucleating agent in an amount from 3 wt.-% to 3.5 wt.-%, based on the total weight of the resin composition.

Additionally or alternatively, further additives such as lubricants, calcium stearate and/ or titanium dioxide may be added, if necessary. Such further additives are preferably present in the resin composition of at least 0.25 phr, more preferably from 0.5 phr to 2 phr and most preferably from 1 phr to 1.5 phr. For example, the resin composition comprises these further additives in an amount of 1.35 phr. In one especially preferred embodiment, the further additives comprises a mixture of a lubricant of 0.15 phr, calcium stearate of 0.2 phr and titanium dioxide of 1 phr. Lubricants, calcium stearates and/ or titanium dioxides suitable in the inventive composition are available from a wide variety of commercial sources. Useful lubricants include the lubricant available from Reagens Deutschland GmbH as Realube 3010. Useful calcium stearates include the calcium stearate available from Reagens Deutschland GmbH as Realube AIS. Useful titanium dioxides include the titanium dioxide available from Dupont, Wilmington, USA as Dupont R960.

Alternatively, the resin composition comprises further additives in an amount of at least 0.5 wt.-%, more preferably from 0.5 wt.% to 2 wt.-% and most preferably from 1 wt.-% to 1.75 wt.-%, based on the total weight of the resin composition. In one preferred embodiment, the resin composition comprises further additives in an amount of between 1 wt.-% and 1.5 wt.-%, based on the total weight of the composition. For example, the resin composition comprises further additives in an amount from 1 wt.-% to 1.25 wt.-%, based on the total weight of the resin composition.

In one preferred embodiment, the resin composition comprises a mixture of at least one polymer resin, wherein the at least one polymer resin is a polyvinyl chloride homopolymer, an acrylic impact modifier, a processing aid comprising a mixture of a low molecular weight acrylic polymer and a high molecular weight acrylic polymer having a mole ratio of about 1:1, a Ca-Zn-containing stabilizer and further additives selected from a lubricant, calcium stearate and titanium dioxide.

In one especially preferred embodiment, the resin composition comprises a mixture of at least one polymer resin in an amount of 100 phr, wherein the at least one polymer resin is a polyvinyl chloride homopolymer, an acrylic impact modifier in an amount of 4 phr, a processing aid comprising a mixture of a low molecular weight acrylic polymer and a high molecular weight acrylic polymer having a mole ratio of 1:1 in an amount of 2 phr, a Ca-Zn-containing stabilizer in an amount of 4.3 phr and further additives selected from a lubricant, calcium stearate and titanium dioxide in an amount of 1.35 phr.

In another aspect, a method for preparing a foamed rigid polymer product is provided, comprising the following steps: providing the composition for preparing a foamed rigid polymer product, and subjecting the composition to conditions under which said composition is converted into a foamed rigid polymer product.

Appropriate process conditions for preparing foamed rigid polymer products are commonly known to the skilled person and/or can be established by routine modifications based on common general knowledge.

For example, the components described above can be blended by conventional high shears mixing techniques commonly known to the skilled person.

After the components of the resin composition have been blended by conventional high shear mixing techniques, the resin composition of the present invention can be converted into a rigid polymer foam by conventional processing techniques such as blow molding, injection molding, compression molding or extrusion molding commonly known to the skilled person.

In one preferred embodiment, the resin composition of the present invention is processed in a conventional extruder which has been fitted with the desired die and which extruder has been heated to the desired temperature. The extruder is operated at a screw speed, temperatures and residence times such that rigid polymer foam products are formed which are commercially acceptable.

For example, the resin may be processed in a Haake twin screw extruder with a counter-rotating screw configuration (Thermo Electron GmbH, Karlsruhe, Germany). The temperature profile for the heating zones 1 to 4 of the Haake extruder is preferably adjusted to temperatures of between 140 °C and 200 °C each from hopper to die.

In one preferred embodiment, the temperature profile for the heating zones 1 to 4 of the Haake extruder is adjusted such that heating zone 1 has a temperature of between 150 °C and 160 °C, heating zone 2 has a temperature of between 160 °C and 170 °C, heating zone 3 has a temperature of between 170 °C and 180 °C and heating zone 4 has a temperature of between 175 °C and 185 °C. In one especially preferred embodiment, the temperature profile for the heating zones 1 to 4 of the Haake extruder is preferably adjusted to temperatures of 155 °C, 165 °C, 175 °C and 180 °C from hopper to die.

In one preferred embodiment, the screw speed of the Haake extruder is adjusted in the range of 10 rpm to 50 rpm, more preferably in the range of 10 rpm to 40 rpm and most preferably in the range of 20 rpm to 30 rpm, e.g. 25 rpm.

The advantage of the resin composition of the present invention is that the amount of calcium carbonate particles can be increased without compromising the density and part weight in the final rigid polymer foam product obtained. The foams prepared from the resin composition of the present invention exhibit excellent properties, e.g. the obtained foamed rigid polymer product has a density of below 1.33 g/cm³ and preferably of between 0.5 g/cm³ and 1.33 g/cm³. For example, the obtained foamed rigid polymer product has a density of below 1.33 g/cm³, preferably of below 1 g/cm³, more preferably of below 0.8 g/cm³, even more preferably of below 0.75 g/cm³ and most preferably of below 0.73 g/cm³.

Additionally or alternatively, the obtained foamed rigid polymer product prepared from the resin composition of the present invention has a charpy impact strength at 23 °C of between 1.65 kJ/m² and 2.00 kJ/m², more preferably between 1.70 kJ/m² and 1.95 kJ/m² and most preferably between 1.75 kJ/m² and 1.80 kJ/m², measured according to ISO 179/1eA on extruded samples.

The term "charpy impact strength" in the meaning of the present invention refers to the kinetic energy per unit area required to break a test specimen under flexural impact. Test specimen is held as a simply supported beam and is impacted by a swinging pendulum. The energy lost by the pendulum is equated with the energy absorbed by the test specimen.

In a further preferred embodiment, the obtained rigid polymer product prepared from the resin composition of the present invention is a foamed rigid PVC polymer product. It is preferred that the obtained rigid polymer product prepared from the resin composition of the present invention is a foamed rigid PVC-µ polymer product.

For example, the obtained foamed rigid PVC-µ polymer product has a density of below 1.33 g/cm³, preferably of below 1 g/cm³, more preferably of below 0.80 g/cm³, even more preferably of below 0.75 g/cm³ and most preferably of below 0.73 g/cm³. Additionally or alternatively, the obtained foamed rigid PVC-µ polymer product prepared from the resin composition of the present invention has a charpy impact strength at 23 °C of between 1.65 kJ/m² and 2.00 kJ/m², more preferably between 1.70 kJ/m² and 1.95 kJ/m² and most preferably between 1.75 kJ/m² and 1.80 kJ/m², measured according to ISO 179/1eA on extruded samples.

In one preferred embodiment, the obtained foamed rigid polymer product prepared from the resin composition of the present invention shows a homogeneous cell size distribution.

Accordingly, in a further aspect, the present invention also provides a foamed rigid polymer product obtainable from the resin composition of the present invention.

In a preferred embodiment, the foamed rigid polymer product is a pipe, window profile, roller-blind profile or sheet.

According to another aspect, the present invention provides the use of surface treated calcium carbonate having a median particle diameter *d*₅₀ of between 0.1 µm and 1 µm, measured according to the sedimentation method, for reducing the density of a foamed rigid polymer product.

The following examples will additionally illustrate the present invention, but are not meant to restrict the invention to the exemplified embodiments. The examples below show the effectiveness of surface-treated calcium carbonate containing composition for reducing the density of a foamed rigid PVC polymer product according to the present invention.

### Description of the figures:

Figure 1: illustrates the effect of various calcium carbonate products on the density of free foam PVC for Comparative Examples E1 to E10 and E14 and Examples E11 to E13 and E15 to E17.
Figure 2: illustrates the effect of various calcium carbonate products on the charpy impact strength of free foam PVC for Comparative Examples E1 to E10 and E14 and Examples E11 to E13 and E15 to E17.

### Examples

### A. Measuring methods

If not otherwise indicated, the parameters mentioned in the present invention are measured according to the measuring methods described below.

### A1. Density

Density measurements are made with Mettler Toledo's Density Kit by using the buoyancy technique. For the determination, 5 samples are cut out of the obtained PVC foams each sample having dimensions of 10x10 mm² and are weight. Subsequently, the buoyancy (P) in distilled water is measured and the density is calculated with the formula (M/(M-P))*density of water.

### A2. Weight median particle diameter d₅₀ Value

Throughout the present invention, *d*₅₀ is the weight median particle diameter by weight, i.e. representing the particle size so that 50 wt.% of the particles are coarser or finer.

The weight median particle diameter was measured according to the sedimentation method. The sedimentation method is an analysis of sedimentation behaviour in a gravimetric field. The measurement is made with a Sedigraph^{™} 5100 of Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and supersonic.

### A3. Specific surface area (BET)

The specific surface area was measured using nitrogen and the BET method according to ISO 9277.

### A4. Charpy impact strength

Charpy impact strength (23°C ± 2 °C and 50 % relative humidity ± 10 % relative humidity) was measured according to ISO 179/1eA on extruded samples which were cut out of the extrudate in machine direction.

### A5. Moisture content

Moisture content of the inorganic filler is determined by thermogravimetric analysis (TGA). TGA analytical methods provide information regarding losses of mass with great accuracy, and is common knowledge; it is, for example, described in "Principles of Instrumental analysis", fifth edition, Skoog, Holler, Nieman, 1998 (first edition 1992) in Chapter 31 pages 798 to 800, and in many other commonly known reference works. In the present invention, thermogravimetric analysis (TGA) is performed using a Mettler Toledo TGA 851 based on a sample of 500 +/- 50 mg and scanning temperatures from 25 °C to 350 °C at a rate of 20 °C/minute under an air flow of 70 ml/min.

Alternatively, the moisture content of the inorganic filler is determined by the oven method.

### B. Preparation and testing of samples

The components and the respective amounts of the resin compositions prepared in Comparative Examples E1 to E9 are outlined in the following Table 1:

**Table 1:**

| Example/component (phr) | E1 | E2 | E3 | E4 | E5 | E6 | E7 | E8 | E9 |
|---|---|---|---|---|---|---|---|---|---|
| PVC K-value 60 | 100 | 100 | 100 | 100 | 100 | 100 | 100 | 100 | 100 |
| Ca-Zn-containing stabilizer | 4.3 | 4.3 | 4.3 | 4.3 | 4.3 | 4.3 | 4.3 | 4.3 | 4.3 |
| calcium stearate | 0.2 | 0.2 | 0.2 | 0.2 | 0.2 | 0.2 | 0.2 | 0.2 | 0.2 |
| lubricant additive | 0.15 | 0.15 | 0.15 | 0.15 | 0.15 | 0.15 | 0.15 | 0.15 | 0.15 |
| titanium dioxide | 1 | 1 | 1 | 1 | 1 | 1 | 1 | 1 | 1 |
| acrylic polymer high mw | 1 | 1 | 1 | 1 | 1 | 1 | 1 | 1 | 1 |
| acrylic polymer low mw | 1 | 1 | 1 | 1 | 1 | 1 | 1 | 1 | 1 |
| Impact modifier | 4 | 4 | 4 | 4 | 4 | 4 | 4 | 4 | 4 |
| Azodicarbonamide | 0.6 | 0.6 | 0.6 | 0.6 | 0.6 | 0.6 | 0.6 | 0.6 | 0.6 |
| Omyacarb FT | - | 5 | 10 | 15 | 20 | - | - | - | - |
| XP-7100T | - | - | - | - | - | 5 | 10 | 15 | 20 |

In particular, the following commercially available components were used for preparing the compositions:
polyvinyl chloride polymer having a K-value of 60 (commercially available under the trade name Evipol SH6030 PVC; INEOS Chlor Americas Inc., Wilmington, USA),
Ca-Zn-containing stabilizer (commercially available under the trade name Stabilox CZ 2913 GN; Inter-Harz GmbH, Elmshorn, Germany),
calcium stearate (commercially available under the trade name Realube AIS), lubricant additive (commercially available under the trade name Realube 3010), low molecular weight acrylic polymer (commercially available under the trade name Kane Ace^{®} PA101 Processing aid; Kaneka Texas Corporation, Pasadena, USA), high molecular weight acrylic polymer (commercially available under the trade name Kane Ace^{®} PA40 Processing aid; Kaneka Texas Corporation, Pasadena, USA), and acrylic impact modifier (commercially available under the trade name Paraloid^{™} KM 366; Dow Chemical Company, Midland, USA).
Titanium dioxide (commercially available under the trade name Dupont R960; Dupont, Wilmington, USA)
Azodicarbonamide (commercially available under the trade name Forte-cell ***; Cellular Additives, Asheville, USA).

Comparative Examples E2 to E5 further comprise Omyacarb^{®} FT in varying dosage levels of 5 phr, 10 phr, 15 phr and 20 phr, which is a commercially available product of calcium carbonate particles. The calcium carbonate is a wet ground GCC, treated with approximately 1 % by weight of stearic acid, which had the following properties:
*d*₅₀ = approximately 1.4 µm.
BET surface area (before stearic acid treatment) = approximately 5.5 m²/g.

Comparative Examples E6 to E9 further comprise XP-7100T in varying dosage levels of 5 phr, 10 phr, 15 phr and 20 phr, which is a product of calcium carbonate particles. The calcium carbonate is a wet ground GCC, treated with approximately 0.5 % by weight of stearic acid and with approximately 0.5 % by weight of a dispersant having a molecular weight of 35,000 g/mol prepared from 92 wt.-% methoxy polyethylene glycol methacrylate of molecular weight 2,000 g/mole and 8 wt.-% acrylic acid and totally neutralised by soda, which had the following properties:
*d₅₀* = approximately 1.4 µm.
BET surface area (before stearic acid treatment) = approximately 5.5 m²/g.

The components and the respective amounts in phr of the resin compositions prepared in Examples E11 to E13 and E15 to E17 according to the present invention and Comparative Examples E10 and E14 are outlined in the following Table 2:

**Table 2:**

| Example/component (phr) | E10 | E11 | E12 | E13 | E14 | E15 | E16 | E17 |
|---|---|---|---|---|---|---|---|---|
| PVC K-value 60 | 100 | 100 | 100 | 100 | 100 | 100 | 100 | 100 |
| Ca-Zn-containing stabilizer | 4.3 | 4.3 | 4.3 | 4.3 | 4.3 | 4.3 | 4.3 | 4.3 |
| calcium stearate | 0.2 | 0.2 | 0.2 | 0.2 | 0.2 | 0.2 | 0.2 | 0.2 |
| lubricant additive | 0.15 | 0.15 | 0.15 | 0.15 | 0.15 | 0.15 | 0.15 | 0.15 |
| titanium dioxide | 1 | 1 | 1 | 1 | 1 | 1 | 1 | 1 |
| acrylic polymer high mw | 1 | 1 | 1 | 1 | 1 | 1 | 1 | 1 |
| acrylic polymer low mw | 1 | 1 | 1 | 1 | 1 | 1 | 1 | 1 |
| Impact modifier | 4 | 4 | 4 | 4 | 4 | 4 | 4 | 4 |
| Azodicarbonamide | 0.6 | 0.6 | 0.6 | 0.6 | 0.6 | 0.6 | 0.6 | 0.6 |
| Omyacarb UFT | 5 | 10 | 15 | 20 | - | - | - | - |
| Hydrocarb UFT Extra | - | - | - | - | 5 | 10 | 15 | 20 |

The resin components are commercially available as outlined above under Table 1.

Comparative Example E10 and Examples E11 to E13 according to the present invention further comprise Omyacarb UFT in varying dosage levels of 5 phr, 10 phr, 15 phr and 20 phr, which is a commercially available product of calcium carbonate particles. The calcium carbonate is a wet ground GCC, treated with approximately 1 % by weight of stearic acid, which had the following properties:
*d*₅₀ = approximately 0.7 µm.
BET surface area (before stearic acid treatment) = approximately 9.5 m²/g.

Comparative Example E14 and Examples E15 to E17 according to the present invention further comprise Hydrocarb UFT Extra in varying dosage levels of 5 phr, 10 phr, 15 phr and 20 phr, which is a commercially available product of calcium carbonate particles. The calcium carbonate is a wet ground GCC, treated with approximately 0.5 % by weight of stearic acid and with approximately 0.5 % by weight of a dispersant having a molecular weight of 35,000 g/mol prepared from 92 wt.-% methoxy polyethylene glycol methacrylate of molecular weight 2,000 g/mole and 8 wt.-% acrylic acid and totally neutralised by soda, which had the following properties:
*d*₅₀ = approximately 0.7 µm.
BET surface area (before stearic acid treatment) = approximately 9.5 m²/g.

Properties of the samples according to Comparative Examples E1to E9 are shown in the following Table 3:

**Table 3:**

| | E1 | E2 | E3 | E4 | E5 | E6 | E7 | E8 | E9 |
|---|---|---|---|---|---|---|---|---|---|
| Density (g/cm³) | 0.55 | 0.64 | 0.7 | 0.72 | 0.73 | 0.63 | 0.68 | 0.72 | 0.76 |
| Charpy impact strength at 23°C (kJ/m²) | 1.8 | 1.78 | 1.71 | 1.71 | 1.76 | 1.79 | 1.67 | 1.73 | 1.72 |
| STD Dev. ± (kJ/m²) | 0.23 | 0.25 | 0.26 | 0.27 | 0.15 | 0.22 | 0.22 | 0.23 | 0.07 |

The data of Comparative Examples E2 to E9 demonstrate that the incorporation of calcium carbonate having a weight median particle diameter *d*₅₀ value of about 1.4 µm into the foam increases density above Comparative Example E1 representing an unfilled control, i.e. the composition does not contain calcium carbonate.

The data further demonstrate that the density increases with higher loadings of such calcium carbonate. The highest increase in density is obtained for the dosage levels of 20 phr of Omyacarb FT and XP-7100T, respectively (cf. Comparative Examples E5 and E9).

Furthermore, the data show that the charpy impact performance is equivalent across the carbonate products and loading levels used in E2 to E9. Fine calcium carbonate having a weight median particle diameter *d*₅₀ value of 1.4 µm develops excellent charpy impact properties at up to 20 phr (cf. Comparative Examples E5 and E9) compared to unfilled Comparative Example E1.

Properties of the samples according to Examples E10 to E17 are shown in the following Table 4:

**Table 4:**

| | E10 | E11 | E12 | E13 | E14 | E15 | E16 | E17 |
|---|---|---|---|---|---|---|---|---|
| Density (g/cm³) | 0.61 | 0.65 | 0.67 | 0.71 | 0.63 | 0.67 | 0.69 | 0.73 |
| Charpy impact strength at 23°C (kJ/m²) | 1.87 | 1.92 | 1.82 | 1.77 | 1.85 | 1.84 | 1.81 | 1.71 |
| STD Dev. ± (kJ/m²) | 0.17 | 0.27 | 0.29 | 0.3 | 0.3 | 0.34 | 0.3 | 0.17 |

The data of Comparative Examples E10 and E14 and Examples E11 to E13 and E15 to E17 demonstrate that also the incorporation of ultrafine calcium carbonate having a weight median particle diameter *d*₅₀ value of 0.7 µm into the foam increases density above Comparative Example E1 (density of 0.55 g/cm³; cf. E1 in Table 3 above).

The data further demonstrate that above 5 phr, the ultrafine particles having a weight median particle diameter *d*₅₀ value of 0.7 µm develop lower foam densities than the fine materials having a weight median particle diameter *d*₅₀ value of about 1.4 µm (cf. E2 to E9 in Table 3 above).

Furthermore, it can be gathered from Table 4 that the ultrafine calcium carbonate product Omyacarb UFT (E10 to E13) develops excellent foam densities, which is even more efficient in the reduction of foam density compared to the ultrafine calcium carbonate product Hydrocarb UFT Extra (E14 to E17).

In addition thereto, the data show that the charpy impact performance is also equivalent across the carbonate products and loading levels used in E10 to E17. Ultrafine calcium carbonate having a weight median particle diameter *d*₅₀ value of about 0.7 µm develops excellent charpy impact properties at up to 20 phr (cf. E13 and E17) compared to unfilled Comparative Example E1.

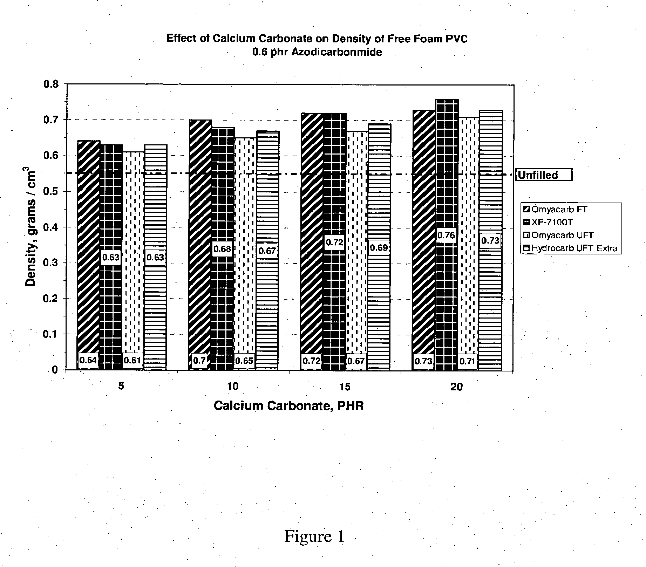

For illustrative reasons, the effect of the respective calcium carbonate products on the density of free foam PVC is outlined in Figure 1 for Comparative Examples E1 to E10 and E14 and Examples E11 to E13 and E15 to E17.

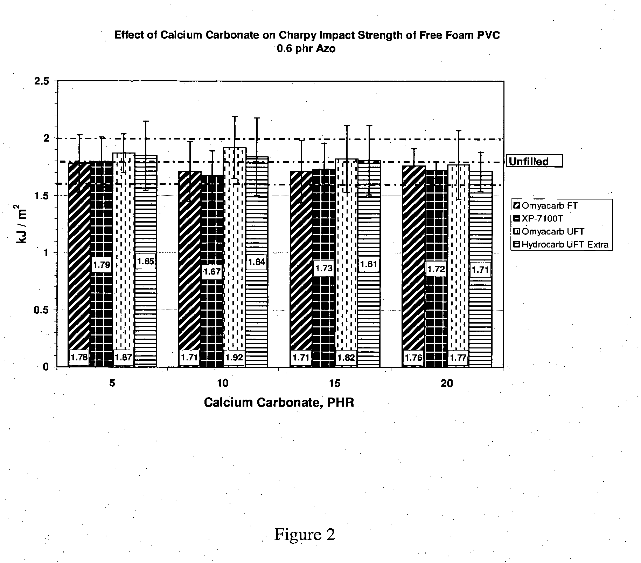

Furthermore, for illustrative reasons, the effect of the respective calcium carbonate products on the charpy impact strength of free foam PVC is summarized in Figure 2 for Comparative Examples E1 to E10 and E14 and Examples E11 to E13 and E15 to E17.

Consequently, a composition for preparing foamed rigid polymer products comprising an especially surface-treated calcium carbonate and azodicarbonamide has been shown to be highly efficient in the reduction of foam density.

## Claims

1. A resin composition for preparing foamed rigid polymer products, said composition comprising
a) at least one polymer resin,
b) a surface-treated calcium carbonate having a weight median particle diameter *d*₅₀ from 0.5 µm to 0.9 µm, measured according to the sedimentation method, in an amount of at least 10 parts per hundred parts of the at least one polymer resin (phr), and
c) a blowing agent in an amount of less than 1 phr.

2. The composition according to claim 1, wherein the calcium carbonate has a weight median particle diameter *d*₅₀ from 0.6 µm to 0.8 µm and preferably of 0.7 µm, measured according to the sedimentation method.

3. The composition according to claim 1 or 2, wherein the calcium carbonate has a top cut of below 8 µm, preferably of below 6 µm and more preferably of about 4 µm.

4. The composition according to any one of the preceding claims, wherein the calcium carbonate has a specific surface area of from 1 m²/g to 25 m²/g, preferably 5 m²/g to 15 m²/g and more preferably 8 m²/g to 13 m²/g, measured using nitrogen and the BET method.

5. The composition according to any one of the preceding claims, wherein the calcium carbonate is ground calcium carbonate (GCC) and/or precipitated calcium carbonate (PCC), preferably ground calcium carbonate.

6. The composition according to any one of the preceding claims, wherein at least 1 % of the aliphatic carboxylic acid accessible surface area of the calcium carbonate is covered by a coating comprising at least one aliphatic carboxylic acid having between 4 and 24 carbon atoms and/or reaction products thereof, preferably by a coating comprising stearic acid and/or reaction products thereof.

7. The composition according to any one of the preceding claims, wherein the calcium carbonate is present in an amount of at least 5.0 phr, preferably of at least 10 phr, more preferably of at least 15 phr and most preferably of 20 phr.

8. The composition according to any one of the preceding claims, wherein the blowing agent is present in an amount of between 0.3 phr and 0.8 phr and most preferably in an amount of between 0.5 phr and 0.7 phr and/or the blowing agent is azodicarbonamide.

9. The composition according to any one of the preceding claims, wherein the composition further comprises at least one component selected from the group comprising nucleating agents, stabilizers, impact modifiers, lubricant additives, processing aids and mixtures thereof.

10. The composition according to any one of the preceding claims, wherein the at least one polymer resin is selected from the group comprising halogenated polymer resins, styrenic resins, acrylic resins, polyolefines, polycarbonate resins, unsaturated polyester resins, polyurethane resins, polyamide resins and mixtures thereof, preferably the polymer resin is PVC.

11. The composition according to claim 10, wherein the PVC resin has a K-value of between 50 and 68.

12. A method for preparing a foamed rigid polymer product comprising the following steps:
a) providing the resin composition according to any one of claims 1 to 11, and
b) subjecting the resin composition of step a) to conditions under which said resin composition is converted into a foamed rigid polymer product.

13. The method according to claim 12, wherein the obtained foamed rigid polymer product has a density of below 1 g/cm³, preferably of below 0.80 g/cm³, more preferably of below 0.75 g/cm³ and most preferably of below 0.73 g/cm³, for example of about 0.71 g/cm³.

14. The method according to claim 12 or 13, wherein the obtained foamed rigid polymer product has a charpy impact strength at 23 °C of between 1.65 kJ/m² and 2 kJ/m², more preferably between 1.70 kJ/m² and 1.95 kJ/m² and most preferably between 1.75 kJ/m² and 1.80 kJ/m², measured according to ISO 179/1eA on extruded samples.

15. Use of a surface treated calcium carbonate having a weight median particle diameter *d*₅₀ from 0.5 µm to 0.9 µm, measured according to the sedimentation method, for reducing the density of a foamed rigid polymer product.

16. The use according to claim 15, wherein the calcium carbonate has a weight median particle diameter *d*₅₀ from 0.6 µm to 0.8 µm and preferably of 0.7 µm, measured according to the sedimentation method.

17. The use according to claim 15 or 16, wherein the calcium carbonate has a top cut of below 8 µm, preferably of below 6 µm and more preferably of 4 µm.

18. The use according to any one of claims 15 to 17, wherein the calcium carbonate has a specific surface area of from 1 m²/g to 25 m²/g, preferably 5 m²/g to 15 m²/g and more preferably 8 m²/g to 13 m²/g, measured using nitrogen and the BET method.

19. The use according to any one of claims 15 to 18, wherein the calcium carbonate is ground calcium carbonate (GCC) and/or precipitated calcium carbonate (PCC), preferably ground calcium carbonate.

20. The use according to any one of claims 15 to 19, wherein at least 1 % of the aliphatic carboxylic acid accessible surface area of the calcium carbonate is covered by a coating comprising at least one aliphatic carboxylic acid having between 4 and 24 carbon atoms and/or reaction products thereof, preferably by a coating comprising stearic acid and/or reaction products thereof.

21. The use according to any one of claims 15 to 20, wherein the calcium carbonate is present in an amount of at least 5 phr, preferably of at least 10 phr, more preferably of at least 15 phr and most preferably of 20 phr.

22. The use according to any one of claims 15 to 21, wherein the foamed rigid polymer product has a density of below 1 g/cm³, preferably of below 0.8 g/cm³, more preferably of below 0.75 g/cm³ and most preferably of below 0.73 g/cm³, for example of about 0.71 g/cm³.

23. The use according to any one of claims 15 to 22, wherein the foamed rigid polymer product has a charpy impact strength at 23 °C of between 1.65 kJ/m² and 2 kJ/m², more preferably between 1.70 kJ/m² and 1.95 kJ/m² and most preferably between 1.75 kJ/m² and 1.80 kJ/m², measured according to ISO 179/1eA on extruded samples.

24. A foamed rigid polymer product prepared from the resin composition according to claims 1 to 11.

## Patentansprüche

1. Harzzusammenfassung zur Herstellung von geschäumten, steifen Polymerprodukten, wobei die Zusammensetzung umfasst,
a) wenigstens ein Polymerharz,
b) ein oberflächenbehandeltes Calciumcarbonat mit einem gewichtsgemittelten Partikeldurchmesser *d*₅₀ von 0,5 µm bis 0,9 µm, gemessen gemäss dem Sedimentationsverfahren, in einer Menge von wenigstens 10 Teilen pro 100 Teile des wenigstens einen Polymerharzes (phr), und
c) ein Treibmittel in einer Menge von kleiner 1 phr.

2. Zusammensetzung nach Anspruch 1, bei der das Calciumcarbonat einen gewichtsgemittelten Partikeldurchmesser *d*₅₀ von 0,6 µm bis 0,8 µm aufweist, und bevorzugt von 0,7 µm, gemessen gemäss dem Sedimentationsverfahren.

3. Zusammensetzung nach Anspruch 1 oder 2, bei der das Calciumcarbonat einen Top-Cut von unter 8 µm aufweist, bevorzugt von unter 6 µm, und bevorzugter von etwa 4 µm.

4. Zusammensetzung nach einem der vorhergehenden Ansprüche, bei der das Calciumcarbonat eine spezifische Oberfläche von 1 m²/g bis 25 m²/g aufweist, bevorzugt 5 m²/g bis 15 m²/g, und bevorzugter 8 m²/g bis 13 m²/g, gemessen durch Verwenden von Stickstoff und dem BET Verfahren.

5. Zusammensetzung nach einem der vorhergehenden Ansprüche, bei der das Calciumcarbonat vermahlenes Calciumcarbonat (GCC) und/oder gefälltes Calciumcarbonat (PCC) ist, bevorzugt vermahlenes Calciumcarbonat.

6. Zusammensetzung nach einem der vorhergehenden Ansprüche, bei der wenigstens 1 % der einer aliphatischen Carbonsäure zugänglichen Oberfläche des Calciumcarbonats bedeckt ist durch eine Beschichtung, die wenigstens eine aliphatische Carbonsäure mit zwischen 4 und 24 Kohlenstoffatomen und/oder Reaktionsprodukte davon umfasst, bevorzugt durch eine Beschichtung, die Stearinsäure und/oder Reaktionsprodukte davon umfasst.

7. Zusammensetzung nach einem der vorhergehenden Ansprüche, bei der das Calciumcarbonat in einer Menge von wenigstens 5,0 phr vorhanden ist, bevorzugt von wenigstens 10 phr, bevorzugter von wenigstens 15 phr, und am meisten bevorzugt von 20 phr.

8. Zusammensetzung nach einem der vorhergehenden Ansprüche, bei der das Treibmittel in einer Menge zwischen 0,3 phr und 0,8 phr vorhanden ist, und am meisten bevorzugt in einer Menge zwischen 0,5 phr und 0,7 phr, und/oder das Treibmittel ist Azodicarbonsäureamid.

9. Zusammensetzung nach einem der vorhergehenden Ansprüche, bei der die Zusammensetzung ferner wenigstens eine Komponente umfasst, die ausgewählt ist aus der Gruppe umfassend Nukleierungsmittel, Stabilisatoren, Schlagzähigkeitsverbesserer, Gleitadditive, Verarbeitungshilfsmittel sowie Gemische davon.

10. Zusammensetzung nach einem der vorhergehenden Ansprüche, bei der das wenigstens eine Polymerharz ausgewählt ist aus der Gruppe umfassend halogenierte Polymerharze, Styrolharze, Acrylharze, Polyolefine, Polycarbonatharze, ungesättigte Polyesterharze, Polyurethanharze, Polyamidharze sowie Gemische davon, bevorzugt ist das Polymerharz PVC.

11. Zusammensetzung nach Anspruch 10, bei der das PVC-Harz einen K-Wert zwischen 50 und 68 aufweist.

12. Verfahren zur Herstellung eines geschäumten, steifen Polymerprodukts, umfassend die folgenden Schritte:
a) Bereitstellen der Harzzusammensetzung gemäss einem der Ansprüche 1 bis 11, und
b) Aussetzen der Harzzusammensetzung aus Schritt a) Bedingungen, bei denen die Harzzusammensetzung in ein geschäumtes, steifes Polymerprodukt umgewandelt wird.

13. Verfahren nach Anspruch 12, bei dem das erhaltene geschäumte, steife Polymerprodukt eine Dichte von unter 1 g/cm³ aufweist, bevorzugt von unter 0,80 g/cm³, bevorzugter von unter 0,75 g/cm³, und am meisten bevorzugt von unter 0,73 g/cm³, z.B. von etwa 0,71 g/cm³.

14. Verfahren nach Anspruch 12 oder 13, bei dem das erhaltene geschäumte, steife Polymerprodukt eine Kerbschlagfestigkeit nach Charpy bei 23°C von zwischen 1,65 kJ/m² und 2 kJ/m² aufweist, bevorzugter zwischen 1,70 kJ/m² und 1,95 kJ/m², und am meisten bevorzugt zwischen 1,75 kJ/m² und 1,80 kJ/m², gemessen gemäss ISO 179/1eA an extrudierten Musterteilen.

15. Verwendung eines oberflächenbehandelten Calciumcarbonats mit einem gewichtsgemittelten Partikeldurchmesser *d*₅₀ von 0,5 µm bis 0,9 µm, gemessen gemäss dem Sedimentationsverfahren, zur Verringerung der Dichte eines geschäumten, steifen Polymerprodukts.

16. Verwendung nach Anspruch 15, bei der das Calciumcarbonat einen gewichtsgemittelten Partikeldurchmesser *d*₅₀ von 0,6 µm bis 0,8 µm aufweist, und bevorzugt von 0,7 µm, gemessen gemäss dem Sedimentationsverfahren.

17. Verwendung nach Anspruch 15 oder 16, bei der das Calciumcarbonat einen Top-Cut von unter 8 µm aufweist, bevorzugt von unter 6 µm, und bevorzugter von 4 µm

18. Verwendung nach einem der Ansprüche 15 bis 17, bei der das Calciumcarbonat eine spezifische Oberfläche von 1 m²/g bis 25 m²/g aufweist, bevorzugt 5 m²/g bis 15 m²/g, und bevorzugter 8 m²/g bis 13 m²/g, gemessen durch Verwenden von Stickstoff und dem BET Verfahren.

19. Verwendung nach einem der Ansprüche 15 bis 18, bei der das Calciumcarbonat vermahlenes Calciumcarbonat (GCC) und/oder gefälltes Calciumcarbonat (PCC) ist, bevorzugt vermahlenes Calciumcarbonat.

20. Verwendung nach einem der Ansprüche 15 bis 19, bei der wenigstens 1 % der einer aliphatischen Carbonsäure zugänglichen Oberfläche des Calciumcarbonats bedeckt ist durch eine Beschichtung, die wenigstens eine aliphatische Carbonsäure mit zwischen 4 und 24 Kohlenstoffatomen und/oder Reaktionsprodukte davon umfasst, bevorzugt durch eine Beschichtung, die Stearinsäure und/oder Reaktionsprodukte davon umfasst.

21. Verwendung nach einem der Ansprüche 15 bis 20, bei der das Calciumcarbonat in einer Menge von wenigstens 5,0 phr vorhanden ist, bevorzugt von wenigstens 10 phr, bevorzugter von wenigstens 15 phr, und am meisten bevorzugt von 20 phr.

22. Verwendung nach einem der Ansprüche 15 bis 21, bei der das geschäumte, steife Polymerprodukt eine Dichte von unter 1 g/cm³ aufweist, bevorzugt von unter 0,80 g/cm³, bevorzugter von unter 0,75 g/cm³, und am meisten bevorzugt von unter 0,73 g/cm³, z.B. von etwa 0,71 g/cm³.

23. Verwendung nach einem der Ansprüche 15 bis 22, bei der das geschäumte, steife Polymerprodukt eine Kerbschlagfestigkeit nach Charpy bei 23°C von zwischen 1,65 kJ/m² und 2 kJ/m² aufweist, bevorzugter zwischen 1,70 kJ/m² und 1,95 kJ/m², und am meisten bevorzugt zwischen 1,75 kJ/m² und 1,80 kJ/m², gemessen gemäss ISO 179/leA an extrudierten Musterteilen.

24. Geschäumtes, steifes Polymerprodukt, hergestellt aus der Harzzusammensetzung gemäss den Ansprüchen 1 bis 11.

## Revendications

1. Composition de résine pour la préparation de produits polymères rigides expansés, ladite composition comprenant :
a) au moins une résine polymère,
b) un carbonate de calcium traité en surface ayant un diamètre de particule moyen en poids *d*₅₀ de 0,5 µm à 0,9 µm, mesuré selon la méthode de sédimentation, en une quantité d'au moins 10 parties pour cent parties de l'au moins une résine polymère (phr), et
c) un agent de gonflage en une quantité inférieure à 1 phr.

2. Composition selon la revendication 1, dans laquelle le carbonate de calcium a un diamètre de particule médian en poids *d*₅₀ de 0,6 µm à 0,8 µm et de préférence de 0,7 µm, mesuré selon la méthode de sédimentation.

3. Composition selon la revendication 1 ou 2, dans laquelle le carbonate de calcium a une coupe supérieure (top cut) inférieure à 8 µm, préférentiellement inférieure à 6 µm et plus préférentiellement d'environ 4 µm

4. Composition selon l'une quelconque des revendications précédentes, dans laquelle le carbonate de calcium a une surface spécifique de 1 m²/g à 25 m²/g, préférentiellement de 5 m²/g à 15 m²/g et plus préférentiellement de 8 m²/g à 13 m²/g, mesurée au moyen d'azote et de la méthode BET.

5. Composition selon l'une quelconque des revendications précédentes, dans laquelle le carbonate de calcium est un carbonate de calcium broyé (GCC) et/ou un carbonate de calcium précipité (PCC), préférentiellement un carbonate de calcium broyé.

6. Composition selon l'une quelconque des revendications précédentes, dans laquelle au moins 1 % de la surface du carbonate de calcium accessible à l'acide carboxylique aliphatique est recouvert par un revêtement comprenant au moins un acide carboxylique aliphatique ayant entre 4 et 24 atomes de carbone et/ou des produits réactionnels de celui-ci, préférentiellement par un revêtement comprenant de l'acide stéarique et/ou des produits réactionnels de celui-ci.

7. Composition selon l'une quelconque des revendications précédentes, dans laquelle le carbonate de calcium est présent en une quantité d'au moins 5,0 phr, de préférence d'au moins 10 phr, préférentiellement d'au moins 15 phr et de manière préférée entre toutes de 20 phr.

8. Composition selon l'une quelconque des revendications précédentes, dans laquelle l'agent gonflant est présent en une quantité comprise entre 0,3 phr et 0,8 phr et de manière préférée entre toutes en une quantité comprise entre 0,5 phr et 0,7 phr et/ou l'agent gonflant est un azodicarbonamide.

9. Composition selon l'une quelconque des revendications précédentes, dans laquelle la composition comprend en outre au moins un composant choisi dans le groupe comprenant les agents de nucléation, les agents stabilisants, les modificateurs d'impact, les additifs lubrifiants, les adjuvants de traitement et des mélanges de ceux-ci.

10. Composition selon l'une quelconque des revendications précédentes, dans laquelle au moins une résine polymère est choisie dans le groupe comprenant les résines polymères halogénées, les résines styréniques, les résines acryliques, les polyoléfines, les résines de polycarbonate, les résines de polyester insaturé, les résines de polyuréthanne, les résines de polyamide et des mélanges de celles-ci, préférentiellement la résine polymère est un PVC.

11. Composition selon la revendication 10, dans laquelle la résine de PVC a une valeur K comprise entre 50 et 68.

12. Procédé de préparation d'un produit polymère rigide expansé comprenant les étapes suivantes consistant à :
a) utiliser la composition de résine selon l'une quelconque des revendications 1 à 11, et
b) soumettre la composition de résine de l'étape a) à des conditions dans lesquelles ladite composition de résine est convertie en un produit polymère rigide expansé.

13. Procédé selon la revendication 12, dans lequel le produit polymère rigide expansé a une densité inférieure à 1 g/cm³, préférentiellement inférieure à 0,8 g/cm³, plus préférentiellement inférieure à 0,75 g/cm³ et de manière préférée entre toutes inférieure à 0,73 g/cm³, par exemple d'environ 0,71 g/cm³.

14. Procédé selon la revendication 12 ou 13, dans lequel le produit polymère rigide expansé a une résistance au choc Charpy à 23 °C comprise entre 1,65 kJ/m² et 2 kJ/m², plus préférentiellement entre 1,70 kJ/m² et 1,95 kJ/m² et de manière préférée entre toutes entre 1,75 kJ/m² et 1,80 kJ/m², mesurée selon la norme ISO 179/1eA sur des échantillons extrudés.

15. Utilisation d'un carbonate de calcium traité en surface ayant un diamètre de particule moyen en poids *d*₅₀ de 0,5 µm à 0,9 µm, mesuré selon la méthode de sédimentation, pour réduire la densité d'un produit polymère rigide expansé.

16. Utilisation selon la revendication 15, dans laquelle le carbonate de calcium a un diamètre de particule médian en poids *d*₅₀ de 0,6 µm à 0,8 µm et préférentiellement de 0,7 µm, mesuré selon la méthode de sédimentation.

17. Utilisation selon la revendication 15 ou 16, dans laquelle le carbonate de calcium a une coupe supérieure (top cut) inférieure à 8 µm, préférentiellement inférieure à 6 µm et plus préférentiellement de 4 µm.

18. Utilisation selon l'une quelconque des revendications 15 à 17, dans laquelle le carbonate de calcium a une surface spécifique de 1 m²/g à 25 m²/g, préférentiellement de 5 m²/g à 15 m²/g et plus préférentiellement de 8 m²/g à 13 m²/g, mesurée au moyen d'azote et de la méthode BET.

19. Utilisation selon l'une quelconque des revendications 15 à 18, dans laquelle le carbonate de calcium est un carbonate de calcium broyé (GCC) et/ou un carbonate de calcium précipité (PCC), préférentiellement un carbonate de calcium broyé.

20. Utilisation selon l'une quelconque des revendications 15 à 19, dans laquelle au moins 1 % de la surface du carbonate de calcium accessible à l'acide carboxylique aliphatique est recouvert par un revêtement comprenant au moins un acide carboxylique aliphatique ayant entre 4 et 24 atomes de carbone et des produits réactionnels de celui-ci, préférentiellement par un revêtement comprenant de l'acide stéarique et/ou des produits réactionnels de celui-ci.

21. Utilisation selon l'une quelconque des revendications 15 à 20, dans laquelle le carbonate de calcium est présent en une quantité d'au moins 5,0 phr, préférentiellement d'au moins 10 phr, plus préférentiellement d'au moins 15 phr et de manière préférée entre toutes de 20 phr.

22. Utilisation selon l'une quelconque des revendications 15 à 21, dans laquelle le produit polymère rigide expansé a une densité inférieure à 1 g/cm³, préférentiellement inférieure à 0,8 g/cm³, plus préférentiellement inférieure à 0,75 g/cm³ et de manière préférée entre toutes inférieure à 0,73 g/cm³, par exemple d'environ 0,71 g/cm³.

23. Utilisation selon l'une quelconque des revendications 15 à 22, dans laquelle le produit polymère rigide expansé a une résistance au choc Charpy à 23 °C comprise entre 1,65 kJ/m² et 2 kJ/m², plus préférentiellement entre 1,70 kJ/m² et 1,95 kJ/m² et de manière préférée entre toutes entre 1,75 kJ/m² et 1,80 kJ/m², mesurée selon la norme ISO 179/1eA sur des échantillons extrudés.

24. Produit polymère rigide expansé préparé à partir de la composition de résine selon l'une quelconque des revendications 1 à 11.
